(19) Europäisches Patentamt
European Patent Office
Office européen des brevets

(11) Veröffentlichungsnummer: **0 189 058**
**A2**

(12) **EUROPÄISCHE PATENTANMELDUNG**

(21) Anmeldenummer: **86100204.6**

(22) Anmeldetag: **09.01.86**

(51) Int. Cl.⁴: **C 08 G 18/18**, C 08 L 75/04

(30) Priorität: **23.01.85 DE 3502107**

(43) Veröffentlichungstag der Anmeldung: **30.07.86 Patentblatt 86/31**

(84) Benannte Vertragsstaaten: **AT BE CH DE FR GB IT LI SE**

(71) Anmelder: **BAYER AG, Konzernverwaltung RP Patentabteilung, D-5090 Leverkusen 1 Bayerwerk (DE)**

(72) Erfinder: **Haas, Peter, Dr., Zwengenberger Strasse 43, D-5657 Haan 1 (DE)**
Erfinder: **Freitag, Hans-Albrecht, Dr., 162 River Crest, Dr. *Coraopolis*, PA 15108 (US)**
Erfinder: **Avar, Geza, Dr., Morsbroicher Strasse 29, D-5090 Leverkusen 1 (DE)**

(54) **Verfahren zur Herstellung von gegebenenfalls geschäumten Polyurethanen, die mit einem anderen Werkstoff verbunden oder konfektioniert worden sind.**

(57) Die Erfindung betrifft ein Verfahren zur Herstellung von gegebenenfalls geschäumten, mit einem anderen Werkstoff verbundenen oder konfektionierten Polyurethanen durch Umsetzung von mindestens zwei gegenüber Isocyanaten reaktionsfähige Wasserstoffatome aufweisenden Verbindungen vom Molekulargewicht 400–10.000 mit Polyisocyanaten in Gegenwart von tertiäre Aminogruppen aufweisenden Katalysatoren und gegebenenfalls in Gegenwart von Kettenverlängerungsmitteln vom Molekulargewicht 32–399, Schaumstabilisatoren, Wasser und/oder organischen Treibmitteln sowie gegebenenfalls weiteren Hilfs- und Zusatzmitteln und Verbindung oder Konfektionierung des erhaltenen Polyurethans mit einem anderen Werkstoff, dadurch gekennzeichnet, dass man als Katalysatoren diffusionsstabile Tetraalkyl-α,ω-diaminoalkanole der allgemeinen Formel

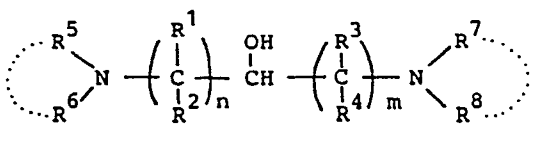

in welcher

$R^1$, $R^2$, $R^3$ und $R^4$ gleich oder verschieden sind und Wasserstoff oder einen $C_1$- bis $C_6$-Alkylrest

$R^5$, $R^6$, $R^7$ und $R^8$ gleich oder verschieden sind und einen $C_1$- bis $C_6$-Alkylrest oder zusammen einen $C_2$- bis $C_6$-Alkylenrest, der Heteroatome, wie O oder NR ($R = C_1$–$C_4$-Alkyl), enthalten kann,

n und m gleich oder verschieden sind und eine ganze Zahl zwischen 1 und 6 bedeuten, verwendet.

EP 0 189 058 A2

0 189 058

BAYER AKTIENGESELLSCHAFT 5090 Leverkusen, Bayerwerk

Konzernverwaltung RP
Patentabteilung GM/Ke-c

# Verfahren zur Herstellung von gegebenenfalls geschäumten Polyurethanen, die mit einem anderen Werkstoff verbunden oder konfektioniert worden sind.

Die Herstellung von Polyurethanen unter Verwendung von Katalysatoren der unterschiedlichsten Art ist bekannt. Bei der Herstellung von Polyurethan-Verbundmaterialien und konfektionierten Polyurethankunststoffen z.B. aus Polyurethanschaumstoffen und Deckmaterialien aus gefärbten Polyvinylchlorid- sowie ABS-Folien oder textilen Deckschichten aus Baumwolle und Leder hat sich nun aber oft gezeigt, daß die Katalysatoren diffusionsbedingte Schädigungen der Deckmaterialien bewirken.

Aus dem Bereich der Möbelindustrie ist bekannt, daß an Sitzmöbeln mit Formschaumteilen und lackierten Sichtholz besonders in wärmeren Jahreszeiten merkliche Lackschäden auftreten können.

Als von großem Nachteil sind in diesem Zusammenhang Erweichung und Verfärbung von Nitrocelluloselacken an den genannten Flächen zu registrieren; desweiteren ist eine Vergilbung von Leder und hellen Textilien, besonders auf Basis von Baumwolle, bekannt.

Für den Bereich hinterschäumter Folien auf Basis PVC und ABS sind durch Aussonderung der Aktivatoren bedingte, deutliche Farbveränderungen der Abdeck- und Verkleidungsmaterialien beobachtet worden, die sich dann in einer intensiven Dunkel- bis Schwarzfärbung auch ehemals heller Folien zeigen.

Die Aufgabe der vorliegenden Erfindung bestand nun darin, Katalysatoren aufzufinden, die auch bei thermischer Belastung von Polyurethan-Verbundmaterialien und konfektionierten Polyurethankunststoffen

1. keine Neigung zu Diffusionseffekten zeigen und daher

2. direkte Kontaktverfärbungen an Deckmaterialien und auch

3. indirekte, durch weitergehende Aussonderung der Katalysatoren bedingte Farb- und Konstitutionsveränderungen an Begleitwerkstoffen verhindern.

Diese Aufgabe wird mit den erfindungsgemäß zu verwendenden Katalysatoren gelöst.

Gegenstand der Erfindung ist ein Verfahren zur Herstellung von gegebenenfalls geschäumten, mit einem anderen Werkstoff verbundenen oder konfektionierten Polyurethanen durch Umsetzung von mindestens zwei gegenüber Isocyanaten rekationsfähige Wasserstoffatome aufweisenden

Verbindungen vom Molekulargewicht 400 - 10000 mit Polyisocyanaten in Gegenwart von tertiäre Aminogruppen aufweisenden Katalysatoren und gegebenenfalls in Gegenwart von Kettenverlängerungsmitteln vom Molekulargewicht 32 - 399, Schaumstabilisatoren, Wasser und/oder organischen Treibmitteln sowie gegebenenfalls weiteren Hilfs- und Zusatzmitteln und Verbindung oder Konfektionierung des erhaltenen Polyurethans mit einem anderen Werkstoff, dadurch gekennzeichnet, daß man als Katalysatoren Tetraalkyl-$\alpha,\omega$-diaminoalkanole der allgemeinen Formel

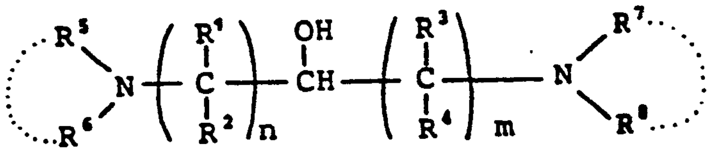

in welcher

$R^1$, $R^2$, $R^3$ und $R^4$ gleich oder verschieden sind und Wasserstoff oder einen $C_1$- bis $C_6$-Alkylrest

$R^5$, $R^6$, $R^7$ und $R^8$ gleich oder verschieden sind und einen $C_1$- bis $C_6$-Alkylrest oder zusammen einen $C_2$- bis $C_6$-Alkylenrest, der Heteroatome, wie O oder NR ($R = C_1$-$C_4$-Alkyl), enthalten kann,

n und m gleich oder verschieden sind und eine ganze Zahl zwischen 1 und 6 bedeuten,

verwendet.

Vorzugsweise werden als andere Werkstoffe PVC, ABS, Mischungen aus PVC, ABS, Polyvinylacetat, Polyvinylbutyral, ferner Co- und Homopolymerisate auf der Basis von Vinylchlorid, Styrol, Butadien, Isopren, Chloropren, Dichlorbutadien, Ethylen, Propen oder Acrylnitril und deren Chlor- und Chlorsulfonierungsderivate in Form von Folien, Überzügen und Umrandungen, gegebenenfalls mit unterschiedlichen Farbtönen, weiter Lacke auf der Basis von Celluloseestern, wie Cellulosenitrate, Celluloseacetate, Cellulosebutylester, Celluloseethern, Polyesterharzen, Epoxidharzen, Alkydharzen sowie Öllacken oder Kombinationslacke dieser Komponenten und Textilien auf der Basis von Baumwolle oder Leder verwendet.

Vorzugsweise bedeutet in der obengenannten allgemeinen Formel

$R^1, R^2, R^3, R^4$ Wasserstoff

$R^5, R^6, R^7, R^8$ Methyl, Ethyl,

$R^5, R^6)$ $R^7, R^8)$ $-(CH_2)_5-$, $-(CH_2)_4-$, $-(CH_2)_2-O-(CH_2)_2-$,

$-(CH_2)_2-N(CH_3)-(CH_2)_2-$

n und m = 1 oder 6

Erfindungsgemäß bevorzugte Katalysatoren sind Verbindungen der Formel

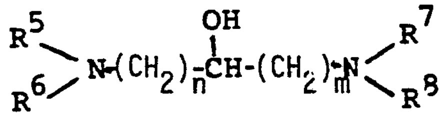

($R^5$, $R^6$, $R^7$ und $R^8$ Methyl oder Ethyl)

n,m = 1 oder

n,m = 6

sowie die Verbindungen

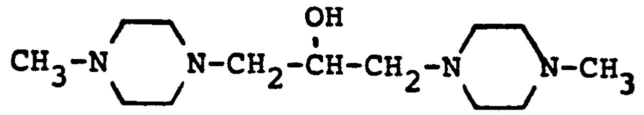 und

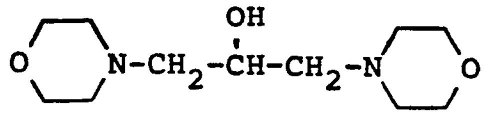

Ein Vertreter der erfindungsgemäß zu verwendenden Tetraalkyl-bis-aminoalkanole ist als Katalysator zur Herstellung von Polyurethanen bekannt (US-PS 3622 542).

Der überraschende Befund, daß die erfindungsgemäß zu verwendenden Tetraalkyl- , -diaminoalkanole eine Verhinderung von Kontaktverfärbungen an der Grenzfläche des Polyurethans z.B. zu Deckmaterialien, wie PVC, ABS oder Textilien oder Leder oder von Schädigungen von zum Polyurethan angrenzenden Lackflächen bei Polyurethan-Verbundmaterialien und von konfektionierten Polyurethankunststoffen bewirken, war indessen bisher nicht bekannt.

Die erfindungsgemäß zu verwendenden Tetraalkyl-bis-aminoalkanole sind wasserhelle Flüssigkeiten mit wenig Eigengeruch, der jedoch bei noch heißen Schaumstoffen, selbst bei Entformung der erhitzten Form, nicht bemerkt wird. Die Tetraalkyl-bis-aminoalkanole werden in der Regel in einer Menge von 0,1 bis 10 Gew.-Teilen, bevorzugt 0,5 bis 5 Gew.-Teilen, gegebenenfalls auch in Abmischungen miteinander, bezogen auf 100 Gew.-Teile der mindestens zwei gegenüber Isocyanaten reaktionsfähige Wasserstoffatome aufweisenden Verbindungen vom Molekulargewicht 400-10000, verwendet.

Als Beispiele für erfindungsgemäß zu verwendende Stoffklasse seien genannt:

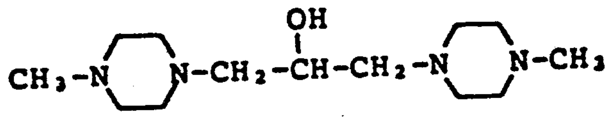

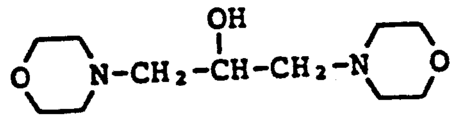

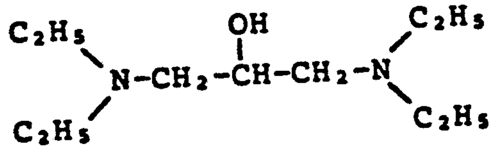

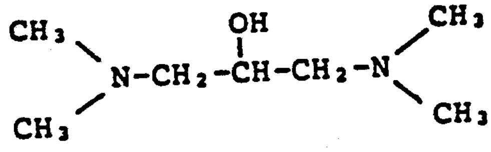

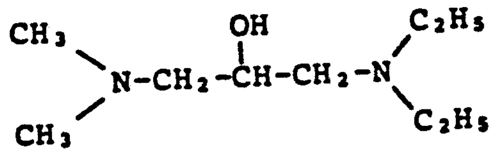

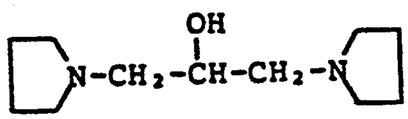

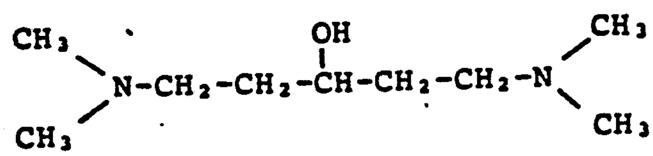

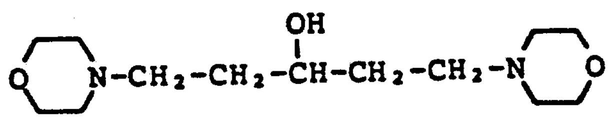

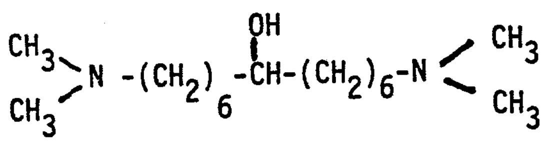

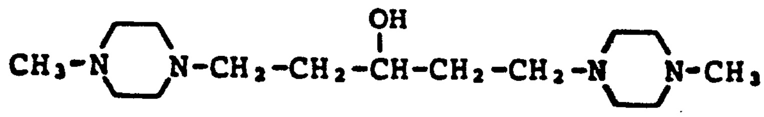

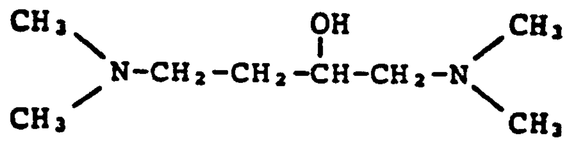

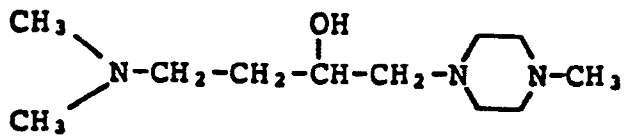

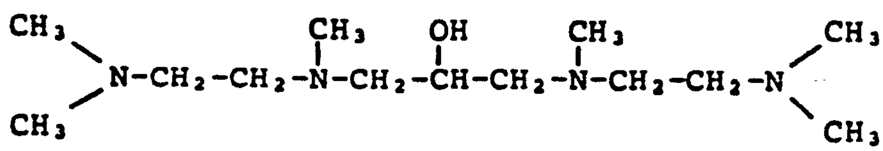

Die erfindungsgemäß bevorzugt einzusetzenden Katalysatoren werden durch Umsetzung von Epichlorhydrin mit den entsprechenden Aminen oder Amingemischen stufenweise umgesetzt.

Als Ausgangsamine zur Synthese der erfindungsgemäß zu verwendenden Tetraalkyl-bis-aminoalkanole werden z.B. die Verbindungen

$HN(CH_3)_2$, $HN(C_2H_5)_2$, 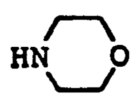 , 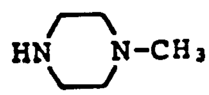 ,

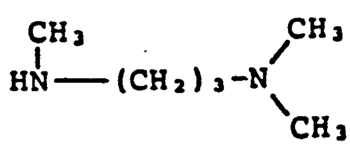 , 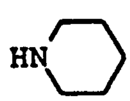 , 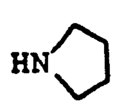 ,

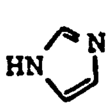 , 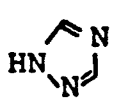 verwendet.

Zur Herstellung der Polyurethane werden erfindungsgemäß verwendet

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden, beispielsweise solche der Formel

$$Q(NCO)_n$$

in der
n = 2-4, vorzugsweise 2-3,
und
Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen

bedeuten, z.B. solche Polyisocyanate, wie sie in der DE-OS 2 832 253, Seiten 10-11, beschrieben werden.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400 - 10.000. Hierunter versteht man neben Aminogruppen, Thiolgruppen oder Carboxylgruppen aufweisenden Verbindungen, vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z.B. mindestens zwei, in der Regel zwei bis acht, vorzugsweise aber 2 bis 6, Hydroxylgruppen aufweisende Polycarbonate und Polyesteramide, wie sie für die Herstellung von homogenen und von zellförmigen Polyurethanen an sich bekannt sind und wie sie z.B. in der DE-OS 2 832 253, Seiten 11-18, beschrieben werden.

3. Gegebenenfalls als Ausgangskomponenten Verbindungen mit mindestens zwei gegenüber Isocyanaten reaktionsfähigen Wasserstoffatomen und einem Molekülgewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19-20, beschrieben.

4. Gegebenenfalls Hilfs- und Zusatzmittel wie

   a) Wasser und/oder leicht flüchtige organische Substanzen als Treibmittel,

   b) Katalysatoren der an sich bekannten Art in Mengen von bis zu 50 Gew.-%, bezogen auf die Mengen an erfindungsgemäß zu verwendenden Katalysatoren,

   c) oberflächenaktive Zusatzstoffe, wie Emulgatoren und Schaumstabilisatoren,

   d) Reaktionsverzögerer, z.B. sauer reagierende Stoffe wie Salzsäure oder organische Säurehalogenide, ferner Zellregler der an sich

bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21-24, beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben, von Vieweg und Höchtlen, Carl-Hanser-Verlag, München 1966, z.B. auf den Seiten 103-113 beschrieben.

Zur Herstellung der Polyurethan-Verbundmaterialien bzw. der konfektionierten Polyurethane werden die erhaltenen Polyurethane mit anderen Werkstoffen, die auf dem Polyurethan z.B. Überzüge, Deckschichten oder Lackschichten bilden, in an sich bekannter Weise verarbeitet.

Die Verbindung zum Verbundmaterial kann dabei gleichzeitig mit der Herstellung des Polyurethans, z.B. nach der Hinterfüllungstechnik, oder auch nach der Herstellung des Polyurethans erfolgen. Die Konfektionierung des Polyurethans, z.B. das Versehen mit einem Überzug aus Leder oder Textilien, erfolgt in der Regel nach seiner Herstellung nach an sich bekannten Verfahren.

Als andere Werkstoffe seien beispielsweise genannt: Polyvinylchlorid in unterschiedlichen Farbtönen, Polyvinylacetat, ABS-Copolymerisate in unterschiedlichen Farbtönen, Kombinationen aus PVC und ABS, weitere Co- und Homopolymere auf der Basis von Vinylchlorid, Styrol, Butadien, Isopren, Chloropren, Dichlorbutadien, Ethylen, Propen, Acrylnitril, deren Chlor- und Chlorsulfonierungsderivate, in Form von Folien, Überzügen oder Umrandungen, Lacke auf der Basis von Celluloseestern wie Cellulosenitrate, Celluloseacetate, Cellulosebutylester, Celluloseether, Polyesterharze, Epoxidharze, Alkydharze, Ölharzlacke oder Kombinationslacke dieser Komponenten. Die mit den erfindungsgemäßen Katalysatoren erhaltenen Polyurethanschaumstoffe, die weich, halbhart oder hart sein können, verhindern auch die Vergilbung von Textilien als Deckmaterialien, z.B. von Baumwollüberzügen und hellem Leder.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zu Umsetzung

gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121-205, beschrieben.

Bei der Schaumstoffherstellung wird erfindungsgemäß die Verschäumung bevorzugt in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche eine Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Aufüllung des Forminneren mit Schaumstoff notwendig ist. Im letztgenannten Fall wird somit unter "over-charging" gearbeitet; eine derartige Verfahrensweise ist z.B. aus den US-Patentschriften 3 178 490 und 3 182 104 bekannt.

Bei der bevorzugten Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß ist oft bevorzugt, in konstant temperierter oder nicht beheizter Form geschäumte (kalthärtende) Formschaumstoffe herzustellen (vgl. GB-Patentschrift 1 162 517, DE-OS 2 153 086).

Selbstverständlich können aber auch Schaumstoffe durch Blockverschäumung oder nach dem an sich bekannten Doppeltransportbandverfahren hergestellt werden.

Die erfindungsgemäß erhältlichen, mit einem anderen Werkstoff verbundenen oder konfektionierten Polyurethane finden z.B. Anwendung als Armaturentafel, Armlehnen, Autohimmel, Kühlmöbel, Liege- und Sitzmöbel, Matratzen, Kopfstützen, Sitze in Verkehrsmitteln wie Auto, Zug, Flugzeug.

## Ausführungs- und Vergleichsbeispiele

1. Synthese von Tetraalkyl-α,ω-diaminoalkanolen

A. In 621 g wäßriger Dimethylaminolösung (c=48 %) werden bei Raumtemperatur 117 ml Epichlorhydrin getropft, so daß 45-50°C gehalten werden. Anschließend wird für 2 Stunden auf 60°C, dann 1 Stunde auf 100°C erhitzt. Nun werden 165 g konz. Natronlauge (c=45 %) eingetropft, 1 h auf 100°C gehalten, dann auf 80°C abgekühlt und 135 g Pottasche zugesetzt, unter 50°C getrennt und über KOH getrocknet.

Kp.: 78-80°C bei 18 mbar, Ausbeute 190 g an

$$(CH_3)_2N-CH_2-\overset{OH}{\overset{|}{C}}H-CH_2-N(CH_3)_2$$

Reinheit nach GC: 99,5 %.

B. Zu 510 g Diethylamin in 300 ml Wasser werden bei Raumtemperatur 117 ml Epichlorhydrin getropft, so daß 50°C gehalten werden. Dann werden für 2 Stunden auf 60°C und für 1 Stunde auf 100°C erwärmt, 165 konz. Natronlauge (c=45 %) zugetropft, eine Stunde gehalten, auf 80°C abgekühlt und 135 g Soda zugesetzt. Unter 50°C wird getrennt und über KOH getrocknet.

Kp.: 60°C bei 0,11 mbar, Ausbeute 199 g an

$$(C_2H_5)_2N-CH_2-\overset{OH}{\overset{|}{C}}H-CH_2-N(C_2H_5)_2$$

Reinheit nach GC: 99,6 %.

C. Zu einer Lösung von 200 g N-Methylpiperazin in 100 ml Wasser werden bei 50°C 92,5 g Epichlorhydrin getropft; man rührt 2 Stunden bei 60°C, erhitzt auf 100°C und tropft 140 g einer 45 %igen Natronlauge zu, hält für 1 Stunde auf 100°C, kühlt auf 80°C ab, setzt 100 g Pottasche zu, trennt und trocknet über KOH.

Kp.: 142-147°C bei 0,2 mbar, Ausbeute 145 g an

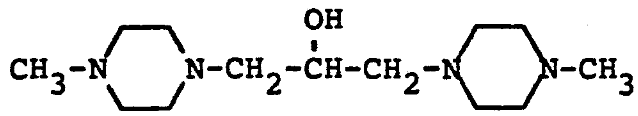

Reinheit nach GC: 99,9 %.

D. Zu 174 g Morpholin in 200 ml Wasser werden bei 50°C 92,5 g Epichlorhydrin getropft, 2 Stunden bei 70°C nachgerührt, auf 100°C erhitzt und 140 g einer 45 %igen Natronlauge eingetropft, für 1 Stunde gehalten und bei 80°C 100 g Pottasche zugefügt. Man trennt bei 80°C und trocknet über KOH.

Kp.: 127°C bei 0,07 mbar, Ausbeute 165 g an

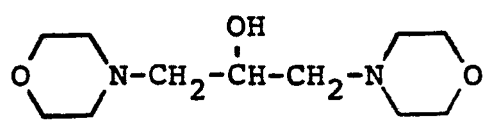

Reinheit nach GC: 99,5 %.

2. Anwendungstechnische Prüfung der Tetramethyl-bis-aminoalkanole im Lacktest

Auf Basis der nachstehenden Rezeptur wurden 4 l-Kasten-Polyurethanschaumstoff-Formteile bei 40°C Formtemperatur hergestellt. Auf diesen Formteilen wurden lackierte Holzbrettchen der Größe 70x100x10 $mm^2$ mit der Lackseite auf dem Schaumstoff fixiert. Als Lack wurde ein handelsüblicher Nitrocellulose-Kombilack (NC-Lack) verwendet, der sehr häufig zur Lackierung der Sichtholzteile von Polstermöbeln eingesetzt wird. Die Probekörper wurden mehrere Tage bei 40°C gelagert und die Veränderungen registriert.

Der Praxisbezug ergibt sich bei lackierten Holzgestellen mit eingearbeiteten und konfektionierten Polyurethanformschaumteilen durch Dochtwirkung der Stoffe beim Transport des diffundierenden Katalysators auf die Lackteile.

Durch die gewählte Technik der direkten Schaumauflage des Lackteils wird die Schädigung lediglich schneller erfaßt bzw. im erfindungsgemäßen Sinn wirksame Katalysatoren unter drastischen Bedingungen geprüft.

| REZEPTUR | I | II | III | IV | V | VI | VII | VIII |
|---|---|---|---|---|---|---|---|---|
| Trifunktioneller Polyether der OH-Zahl 56, welcher durch Addition von PO/EO (87:13) an Trimethylolpropan erhalten wurde | 100 | 100 | 100 | 100 | 100 | 100 | 100 | 100 |
| Wasser | 3,0 | 3,0 | 3,0 | 3,0 | 3,0 | 3,0 | 3,0 | 3,0 |
| Handelsüblicher Siloxan-Stabilisator der Goldschmidt AG | 1,0 | 1,0 | 1,0 | 1,0 | 1,0 | 1,0 | 1,0 | 1,0 |
| Triethylamin | 1,5 | - | - | - | - | - | - | - |
| Tetramethylhexamethylendiamin | - | 0,8 | - | - | - | - | - | - |
| Dicyclohexylmethylamin | - | - | 3,0 | - | - | - | - | - |
| Aktivator gemäß A | - | - | - | 2,0 | - | - | - | - |
| Aktivator gemäß C | - | - | - | - | 2,0 | - | - | - |
| Dimethylaminopropylformamid | - | - | - | - | - | 1,6 | - | - |
| Dimethylaminopropylmorpholin | - | - | - | - | - | - | 2,0 | - |
| 1,3-Bis-dimethylaminopropan | - | - | - | - | - | - | - | 1,5 |

Die jeweils in der vorstehenden Tabelle angegebenen Komponeneten werden mit je 35,2 Teilen eines Isocyanats mit dem NCO-Gehalt von 44,5 %, bestehend aus 80 % eines Gemischs aus 2,4- und 2,6-Tolulylendiisocyanat (80:20) und 20 % eines Polyphenylpolymethylenpolyisocyanates, das durch Phosgenierung eines Anilin-Formaldehyd-Kondensats gewonnen wurde, vermischt und in die Form gegossen.

Ergebnisse des Lacktests

Lagerung der Proben: 30 Tage

| Formteil | I | II | III | IV | V | VI | VII | VIII |
|---|---|---|---|---|---|---|---|---|
| Lackvergilbung | 2 | 4 | 3 | 1 | 1 | 4 | 4 | 2-3 |
| Lackerweichung | 2 | 4 | 1 | 1 | 1 | 4 | 4 | 2 |

Beurteilungsmaßstab
1. völlig unverändert, der Nullprobe entsprechend,
2. geringe Veränderung
3. mittelstarke Veränderung
4. starke Veränderung

Die Katalysatoren wurden in den Beispielen I bis VIII in unterschiedlichen Mengen, entsprechend ihrer aktivierenden Wirkung, eingesetzt.

Aus den Beispielen der Rezepturen von Formteilen nach IV und V geht die erfindungsgemäße Überlegenheit bezüglich der Kontaktverfärbung eindeutig hervor, wie sie nur mit den Tetraalkyl-bis-aminoalkanolen A und C erreicht wird, dies selbst unter drastischen Bedingungen direkter Lackauflage und Langzeitprüfung.

3. Anwendungstechnische Prüfungen von durch halbharte Polyurethanschaumstoffe hinterschäumten PVC-Folien

Zur Hinterschäumung dienten folgende Polyurethan-Rohstoffe:

90 g eines Polyethers vom Molekulargewicht 4800, der durch Anlagerung von Propylenoxid (87 %) und Ethylenoxid (13 %) an Trimethylolpropan erhalten wurde, 2,5 g Wasser, 2 g Tallöl und 0,4 g der nachstehend aufgeführten Aktivatoren wurden mit 47 g eines Polyphenylpolymethylen-polyisocyanats, das durch Phosgenierung eines Anilin-Formaldehyd-Konsates erhalten wurde und einen NCO-Gehalt von 31 Gew.-% aufweist, vermischt und in die Form eingetragen.

Verfahrensweise

Eine nicht eingefärbte, handelsübliche, ca. 0,7 mm dicke PVC-Folie wird in ein temperierbares Plattenmetallwerkzeug der Größe 20 x 20 x 4 cm eingelegt und rückseitig maschinell mit der oben angegebenen Rohstoffmischung hinterfüllt. Nach einer Reaktions- und Aushärtezeit von 5 Min. wird entformt.

Die erhaltenen Formteile werden bei 120°C im Umlufttrockenschrank separat getempert, wobei folgende Ergebnisse erhalten wurden:

| Aktivatoren | 8 h | 18 h bei 120°C |
|---|---|---|
| | Farbveränderung | |
| 1. Diaza-bicyclo-2,2,2-octan | sehr stark verfärbt | totale Verfärbung |
| 2. 2,2'-Dimethylamino-diethylether | rötlich verfärbt | sehr stark verfärbt |
| 3. Aktivator gemäß A | keine Verfärbung | sehr leichte Verfärbung |
| 4. Aktivator gemäß C | keine Verfärbung | sehr leichte Verfärbung |
| 5. Dimethylaminopropyl-formamid | mittelstarke Verfärbung | sehr starke Verfärbung |
| PVC-Folie, farblos (Vergleichsprüfung) | keine Verfärbung | leichte Verfärbung |

Eindeutig wird auch hier die Verhinderung einer Kontaktverfärbung durch die mit den erfindungsgemäßen Tetraalkyl-bis-aminoalkanole aktivierten, halbharten Schaumstoffen belegt.

Bei eingefärbten Folien werden die auftretenden Farbveränderungen erst nach wesentlich längeren Zeiträumen sichtbar.

Bei der analogen Hinterschäumung einer blau eingefärbten, für Autoarmaturen verwendeten 0,7 mm dicken PVC-Folie, werden durch Tempern bei 120°C folgende Ergebnisse erhalten:

| Aktivatoren | 72 h | 168 h | 288 h | 336 h | 504 h |
|---|---|---|---|---|---|
| 1. Diaza-bicyclo-2,2,2-octan | schwarz | schwarz | schwarz | schwarz | schwarz |
| 2. 2,2'-Dimethylamino-diethylether | blau-schwarz | blau-schwarz | schwarz | schwarz | schwarz |
| 3. Aktivator gemäß A | blau | blau | blau | blau | überwiegend blau |
| 4. Aktivator gemäß C | blau | blau | blau | blau | überwiegend blau |
| 5. Dimethylaminopropyl-formamid | blau-schwarz | schwarz | schwarz | schwarz | schwarz |
| blaue PVC-Folie (Vergleichsprüfung) | blau | * | | | |

* Die Folie wird ab hier von silberfarbenen Inseln überzogen, die blaue Grundfarbe bleibt erhalten. Diese Erscheinung tritt jedoch nicht mit den erfindungsgemäßen Aktivatoren auf.

Auch bei der blau eingefärbten, hinterschäumten PVC-Folie wird mit den erfindungsgemäßen Tetraalkyl-bis-aminoalkanolen gemäß A und C eine sonst auftretende Kontaktverfärbung der Folie verhindert, sowie eine Zusatzstabilisierung bewirkt.

Die beschriebenen Effekte treten sogar bei tiefen Temperaturen auf. Aus diesem Grund sind die Einfassungen von Kühltruhen, die größtenteils aus PVC gefertigt werden, oft eingefärbt, um dem Nachteil einer Kontaktverfärbung zu entgehen.

## Patentansprüche

1. Verfahren zur Herstellung von gegebenenfalls geschäumten, mit einem anderen Werkstoff verbundenen oder konfektionierten Polyurethanen durch Umsetzung von mindestens zwei gegenüber Isocyanaten reaktionsfähige Wasserstoffatome aufweisenden Verbindungen vom Molekulargewicht 400 - 10.000 mit Polyisocyanaten in Gegenwart von tertiäre Aminogruppen aufweisenden Katalysatoren und gegebenenfalls in Gegenwart von Kettenverlängerungsmitteln vom Molekulargewicht 32 - 399, Schaumstabilisatoren, Wasser und/oder organischen Treibmitteln sowie gegebenenfalls weiteren Hilfs- und Zusatzmitteln und Verbindung oder Konfektionierung des erhaltenen Polyurethans mit einem anderen Werkstoff, dadurch gekennzeichnet, daß man als Katalysatoren diffusionsstabile Tetraalkyl-$\alpha,\omega$-diaminoalkanole der allgemeinen Formel

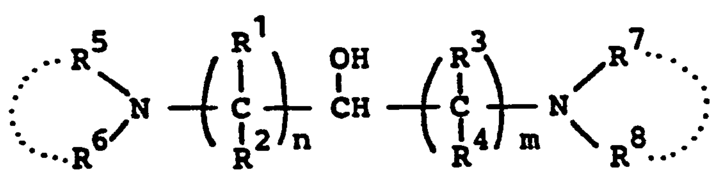

in welcher

$R^1$, $R^2$, $R^3$ und $R^4$ gleich oder verschieden sind und Wasserstoff oder einen $C_1$- bis $C_6$-Alkylrest

$R^5$, $R^6$, $R^7$ und $R^8$ gleich oder verschieden sind und einen $C_1$- bis $C_6$-Alkylrest oder zusammen einen $C_2$- bis $C_6$-Alkylenrest, der Heteroatome, wie O oder NR (R = $C_1$-$C_4$-Alkyl), enthalten kann,

n und m gleich oder verschieden sind und eine ganze Zahl zwischen 1 und 6 bedeuten,

verwendet.

2. Verfahren gemäß Anspruch 1, dadurch gekennzeichnet, daß als anderer Werkstoff PVC, ABS, Mischungen aus PVC, ABS, Polyvinylacetat, Polyvinylbutyral, ferner Co- und Homopolymerisate auf der Basis von Vinylchlorid, Styrol, Butadien, Isopren, Chloropren, Dichlorbutadien, Ethylen, Propen oder Acrylnitril und deren Chlor- und Chlorsulfonierungsderivate in Form von Folien, Überzügen und Umrandungen, gegebenenfalls mit unterschiedlichen Farbtönen, weiter Lacke auf der Basis von Celluloseestern wie Cellulosenitrate, Celluloseacetate, Cellulosebutylester, Celluloseethern, Polyesterharzen, Epoxidharzen, Alkydharzen sowie Öllacken oder Kombinationslacken dieser Komponenten und Textilien auf der Basis von Baumwolle oder Leder verwendet werden.

3. Verfahren gemäß Anspruch 1 und 2, dadurch gekennzeichnet, daß als Katalysatoren Verbindungen der Formel

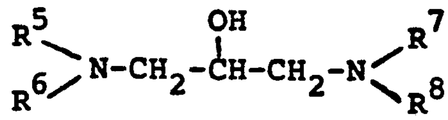

in der $R^5$, $R^6$, $R^7$ und $R^8$ Methyl oder Ethyl bedeuten,

verwendet werden.

4. Verfahren gemäß Anspruch 1 und 2, dadurch gekennzeichnet, daß als Katalysator die Verbindung

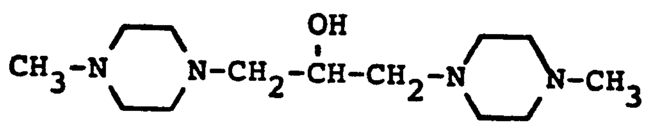

verwendet wird.

5. Verfahren gemäß Anspruch 1 und 2, dadurch gekennzeichnet, daß als Katalysator die Verbindung

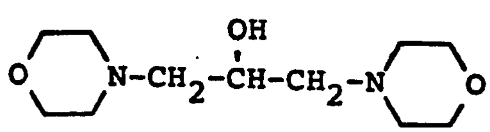

verwendet wird.

6. Verfahren gemäß Anspruch 1 und 2, dadurch gekennzeichnet, daß als Katalysatoren Verbindungen der Formel

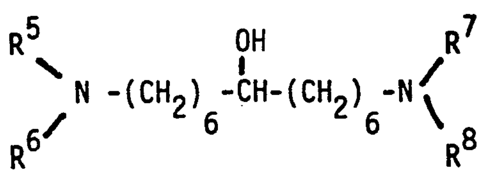

in der $R^5$, $R^6$, $R^7$ und $R^8$ Methyl oder Ethyl bedeuten, verwendet werden.